(19) Europäisches Patentamt
European Patent Office
Office européen des brevets

(11) Publication number: **0 238 863 A2**

(12) **EUROPEAN PATENT APPLICATION**

(21) Application number: **87102509.4**

(22) Date of filing: **23.02.87**

(51) Int. Cl.⁴: **C 08 F 287/00**, C 08 F 2/46, C 08 L 53/00, C 09 D 3/00, B 32 B 27/28

(30) Priority: **27.02.86 US 833630**

(43) Date of publication of application: **30.09.87 Bulletin 87/40**

(84) Designated Contracting States: **BE DE ES FR GB IT NL**

(71) Applicant: **W.R. GRACE & CO., Grace Plaza 1114 Avenue of the Americas, New York New York 10036 (US)**

(72) Inventor: **Klingler, Lori Jane, 5456 Harpers Farm Road, Apt. B2, Columbia, Md. 21044 (US)**
Inventor: **Bush, Richard Wayne, 5478 Treefrog Place, Columbia, Md. 21045 (US)**
Inventor: **Morgan, Charles Robert, 19108 Holberton Lane, Brookeville, Md. 20833 (US)**

(74) Representative: **UEXKÜLL & STOLBERG Patentanwälte, Beselerstrasse 4, D-2000 Hamburg 52 (DE)**

(54) **Uv or heat curable reinforced elastomer compositions.**

(57) A radiation or heat cured elastomer is described which exhibits enhanced physical properties by virtue of its cure resulting in phase segregation.

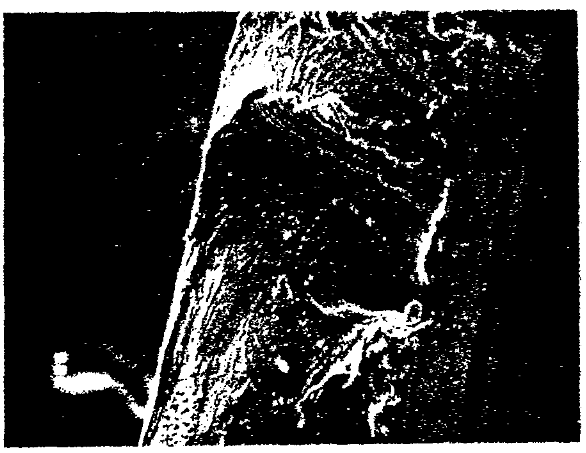

EP 0 238 863 A2

## BACKGROUND OF THE INVENTION

The subject invention relates to elastomers formed from liquids by thermal or photopolymerization and to methods for producing such elastomers.

Elastomers as originally defined by Tisher in 1940 referred to synthetic, thermosetting, high polymers having properties similar to those of vulcanized rubber, namely the ability to be stretched to at least twice their original length and to retract very rapidly to approximately their original length when released. Among the better known elastomers introduced since the 1930's are styrene-butadiene copolymers, polychloroprene (neoprene), nitrile rubber, butyl rubber, polysulfide rubber ("Thiokol"), cis-1,4-polyisoprene, ethylene-propylene terpolymers (EPDM rubber), silicone rubber and polyurethane rubber. These can be crosslinked with sulfur, peroxides or similar agents.

The term 'elastomer' was later extended to include certain rubber-like uncrosslinked polymers that can be processed as thermoplastics; these are generally known as thermoplastic elastomers. Their extension and retraction properties are notably different from those of thermosetting elastomers, but they are well adapted to such specific uses as wire and cable coatings, automobile bumpers, vibration dampers and specialized mechanical products.

In all areas of utility the requirements exist for elastomers of optimum physical properties. Within this context the instant invention is focused particularly on the area of thermoplastic elastomers comprised of block copolymers and their incorporation into liquid systems which can be rapidly cured to elastomeric products.

## PRIOR ART DESCRIPTION

Briefly, consideration of the prior art as documented

by the patent literature directed at block copolymer based elastomer preparation will prove to be useful.

The prior art is very amply documented by patents teaching elastomer preparations through processes whose parameters have either been designed to result in specifically desired product characteristics for envisaged applications or whose parameters have been set by experimentation which has led to products of unexpected but desirable characteristics.

One of the frequently referred-to earlier references relating to the preparation of block copolymers of monovinyl aromatic hydrocarbons and conjugated dienes is the G. Holden reference (U. S. Patent 3,265,765) which teaches block copolymers which are useful without being vulcanized, a process which heretofore had been essential to impart useful elastomeric properties to such products such as rendering them tackless and increasing their strength.

Prior to the G. Holden reference one may also take into consideration the A. Stein et al reference (U. S. Patent 2,862,907) which teaches the polymerization product of vinylidene aromatic hydrocarbons having rubbery conjugated 1,3-diene polymers dissolved therein.

With the development of photochemical technology, photosensitive elastomers have been produced and, one may refer, for example, to the J. Milgrom reference (U. S. Patent 3,674,486) as providing documentation teaching a styrene/rubber block copolymer composition comprising in addition a solvent, a crosslinker and a photosensitizer. Upon exposure to actinic radiation this formulation is made into a photoresist sheet.

In the preparation of styrene-butadiene copolymer comprising photosensitive compositions, other additional components have been introduced such as photopolymerizable

monomers containing one or more vinyl groups and, as an example of art documenting such teachings, we have the H. Toda et al reference (U. S. Patent 4,045,231).

Three additional prior art references worthy of mention are the G. Chen et al and the G. Heinz et al references (U. S. Patents 4,323,636 and 4,369,246, Chen, and 4,430,417, Heinz). These teach photopolymerizable compositions comprising an elastomeric block copolymer plus non-gaseous, ethylenically unsaturated, low molecular weight compounds in addition to the usual photoinitiators and other possible additives. These references are primarily directed at the printing plate utility for the final product, and hence process parameters are accordingly set to result in products with suitable characteristics therefor, such as inter alia transparency, etc.

These and other prior art references, therefore, attest to the endeavor under way to constantly improve the process efficiency and product characteristics of elastomeric materials.

BRIEF DESCRIPTION OF THE INVENTION

It was unexpectedly discovered that a thermoplastic elastomer dissolved in a methacrylate monomer in the presence of a photoinitiator on exposure to ultraviolet light gave a phase segregated cure, which resulted in a cloudy white elastomer of exceptionally good physical properties. A phase segregated cure also resulted when the liquid blend was heated in the presence of a free radical thermal initiator.

DETAILED DESCRIPTION OF THE INVENTION

This invention relates to a curable, liquid, homogeneous, essentially transparent composition comprising

(1) 1 to 50% by weight of a block copolymer (as

hereinafter defined) containing both hard and soft segments;

(2) 50 to 99% by weight of at least one monofunctional methacrylate monomer of the formula:

$$CH_2=\overset{\overset{CH_3}{|}}{C}-\underset{\underset{O}{\|}}{C}-O-R$$

wherein R is an aliphatic moiety containing at least 4 carbon atoms and optionally containing one or more non-adjacent heteroatoms from the group consisting of O and N; and

(3) either a photoinitiator or thermal initiator for (2).

The composition may also contain in addition up to 20% by weight of a reactive acrylic diluent of the formula:

$$(CH_2=\overset{\overset{R_1}{|}}{C}-\underset{\underset{O}{\|}}{C}-O)_n-R_2$$

wherein $R_1$ is -H or $-CH_3$ and $R_2$ is an organic moiety having the valence of n and n is 1 or more. The composition on being subjected to UV or high energy radiation or heat results in a cloudy or opaque phase-segregated elastomer having enhanced toughness properties as will be shown by examples hereinafter.

As used herein, the term "block copolymer" means copolymers containing at least two different homopolymer segments, at least one of which is hard (having a glass transition temperature in the range -20°C to +15°C) and at least one of which is soft (having a glass transition temperature of below -20°C). Di-, tri- or higher block

copolymers are operable herein with the soft block segment being present in an amount in the range 1 to 99% by weight, preferably 50 to 90% by weight and the hard block segment making up the balance. Block copolymers operable herein to form reinforced elastomers include styrene/elastomer block copolymers, polyurethane block copolymers and polyester/polyether block copolymers.

Styrene/elastomer block copolymers have the general formula $(S-E)_nX$ where S represents a polystyrene end segment, E represents an elastomer mid-segment (usually either polybutadiene, polyisoprene or ethylene-butylene rubber), and X represents a junction point. Where n = 1 or 2, the block copolymers are said to be linear, and where $n > 2$, they are said to be radial or star shaped. If n = 1 and X = S, the result is a linear triblock copolymer. Linear and radial block copolymers show some property differences but a more important difference is between block copolymers with polybutadiene or polyisoprene mid-segments and those with ethylene-butylene rubber midsegments. Polybutadiene and polyisoprene, since they contain unsaturated carbon linkages in the backbone chain of the polymer, are not as oxidation stable as ethylene-butylene rubber which is completely saturated.

Although chemically different, polyurethane and polyester/polyether thermoplastic elastomers are both intended for high-performance applications and have similar properties. These thermoplastic elastomers are alternating block copolymers having segments of a hard, highly polar or crystallizing material such as urethane or polyester linked by segments of amorphous material (i.e., polyether). These thermoplastic elastomers are rubber-like at normal service temperature but when heated can be processed like thermoplastics.

In polyurethane and polyester/polyether thermoplastic

elastomers, hard and soft segments alternate along the polymer chain. In the polyurethane block copolymers, the hard blocks typically consist of a mixture of 2,4- and 2,6-toluene diisocyanate, chain-extended with butane diol. A typical polyether elastomer block is polytetramethylene oxide and a typical polyester elastomer block is polybutylene adipate. The polyester/polyether block copolymers have hard segments consisting of polybutylene terephthalate and elastomer blocks of polytetramethylene ether glycol.

Thus, the subject invention relates to elastomer based materials exhibiting improved physical properties which allow said materials to lend themselves to applicability in the areas of coatings, free standing films or in the formation of laminates.

It is an object of the present invention to provide an elastomeric material which is cost efficiently prepared as a liquid mixture which cures by ultraviolet radiation or heat to a tough film characterized by superior physical properties such as high tensile strength and high percent elongation at failure.

It is a further object of the subject invention to provide an elastomeric material of such superior physical properties which allow it to lend itself for applicability particularly in the area of coatings and free standing films.

These and other objects of the subject invention will become obvious as the description of the invention proceeds.

Curing as the term is used by the polymer chemist, is the carrying out of a variety of chemical reactions whose purpose it is to bring about certain changes in the physical properties of a polymer. These changes ordinarily include an increase in hardness and strength

and a decrease in fluidity. They convert a fluid or malleable substance suitable for processing operations to a material with the physical properties of a usable finished product. Curing may be brought about by heat or irradiation, and/or by curing agents (or hardeners) which may be either reactive or catalytic.

The degree of cure may be checked by tests of, for example, tensile strength, modulus or hardness.

It was discovered that a liquid photopolymer composition comprising a non-reactive, thermoplastic rubber (e.g., styrene-isoprene-styrene triblock copolymer) diluted in long-chain, i.e., butyl and higher aliphatic methacrylate and a radical initiator, when exposed to ultraviolet radiation or heat, caused a phase segregated cure to take place which turned the transparent, photosensitive, liquid solution into a cloudy white or opaque solid elastomer exhibiting unexpectedly enhanced toughness properties compared to typical polymerized liquids.

More specifically, a non-reactive thermoplastic rubber, e.g., a styrene-isoprene-styrene triblock copolymer, was diluted in a UV reactive diluent in a proportion such that the resulting blend was a liquid. The homogeneous liquid photopolymer was then cured in the presence of a photoinitiator to result in a cloudy, white, reinforced elastomer which was determined by a scanning electron microscope to be phase-segregated.

It was determined that phase segregation is best induced by the use of a long-chain, monofunctional, methacrylate monomer of the formula:

$$CH_2=\overset{\overset{\displaystyle CH_3}{|}}{C}-\underset{\underset{\displaystyle O}{\|}}{C}-O-R$$

wherein R is an aliphatic moiety containing at least 4 carbon atoms and optionally containing one or more non-adjacent heteroatoms from the group consisting of O and N, as will be expounded upon subsequently.

With reference to FIGURES 1-4 which are scanning electron micrographs of the cured photopolymer of Example 1 magnified 100, 4,000, 8,000 and 20,000 times, respectively, it is pointed out that there is a non-continuous phase of the cured material and a continuous phase.

The composition of the cured photopolymer which was used in the obtention of the micrographs supra amounts to 30% of a styrene-isoprene-styrene triblock copolymer, 65.5% of lauryl methacrylate, 3.0% of trimethylolpropane trimethyacrylate and 1.5% of a photoinitiator and said polymer's preparation is described in greater detail in Example 1.

While for instance the use of lauryl methacrylate as the long chain aliphatic monofunctional monomer was particularly suitable, it may be replaced by other methacrylates such as hexyl, isodecyl or stearyl methacrylates to obtain products with similar properties.

With respect to polystyrene-polyisoprene-polystyrene triblock copolymer, it is also stipulated that it may be substituted by other thermoplastic elastomers such as polystyrene-polybutadiene-polystyrene triblock or multiblock copolymers.

While not wishing to be bound by any theories, it is speculated that the introduction of discontinuities or nuclei in the incipient path of a fracture surface will increase the resistance to crack propagation. Thus, if discrete particles of a different phase can be dispersed uniformly in a polymer, then overall physical properties

can be increased.

Therefore, as will be illustrated quantitatively in the examples, by being able to phase-segregatively cure a block copolymer diluted with a curable methacrylate compound as defined herein, the product obtained is characterized by continuous and discontinuous phases and exhibits markedly enhanced physical properties in comparison with a non-phase-segregatively cured product (FIGURES 5-8) as shown in an example hereinafter.

In the following examples the preferred elastomer used was "Kraton(R)" D-1107, a Shell Chemical Company product consisting of a styrene-isoprene-styrene triblock copolymer.

Operable long-chain, monofunctional methacrylates of the formula:

$$CH_2{=}\overset{\overset{\large CH_3}{|}}{C}-\underset{\underset{\large O}{\|}}{C}-O-R$$

include, but are not limited to, butyl, hexyl, 2-ethylhexyl, lauryl, isodecyl, stearyl and oleyl methacrylates, as well as 2-butoxyethyl, 2-ethoxybutyl, 3-methoxybutyl, dimethylaminoethyl, diethylaminoethyl and diisopropylaminoethyl methacrylates.

In addition to the required monofunctional methacrylate, the composition may also contain up to 20% by weight of a reactive, acrylic or methacrylic diluent of the formula:

$$(CH_2{=}\overset{\overset{\large R_1}{|}}{C}-\underset{\underset{\large O}{\|}}{C}-O)_n-R_2$$

wherein $R_1$ is H or $CH_3$ and $R_2$ is an organic moiety having the valence of n and n is 1 or more. Such reactive acrylic diluents include, but are not limited to,

trimethylolpropane triacrylate, hexanediol diacrylate, 1,3-butylene glycol diacrylate, diethylene glycol diacrylate, 1,6-hexanediol diacrylate, neopentyl glycol diacrylate, polyethylene glycol 200 diacrylate, tetraethylene glycol diacrylate, triethylene glycol diacrylate, pentaerythritol tetraacrylate, tripropylene glycol diacrylate, ethoxylated bisphenol-A diacrylate, trimethylolpropane triacrylate, di-trimethylolpropane tetraacrylate, triacrylate of tris(hydroxyethyl) isocyanurate, dipentaerythritol hydroxypentaacrylate, pentaerythritol triacrylate, ethoxylated trimethylolpropane triacrylate, triethylene glycol dimethacrylate, ethylene glycol dimethacrylate, tetraethylene glycol dimethacrylate, polyethylene glycol-200 dimethacrylate, 1,6-hexanediol dimethacrylate, neopentyl glycol dimethacrylate, polyethylene glycol-600 dimethacrylate, 1,3-butylene glycol dimethacrylate, ethoxylated bisphenol-A dimethacrylate, trimethylolpropane trimethacrylate, diethylene glycol dimethacrylate, 1,4-butanediol diacrylate, diethylene glycol dimethacrylate, pentaerythritol tetramethacrylate, glycerin dimethacrylate, trimethylolpropane dimethacrylate, pentaerythritol trimethacrylate, pentaerythritol dimethacrylate, pentaerythritol diacrylate and the like which can be added to the composition to modify or further toughen the phase segregated product. Monoacrylates such as cyclohexyl acrylate, isobornyl acrylate and tetrahydrofurfuryl acrylate and the corresponding methacrylates are also operable as the optional reactive diluents.

In comparative examples, analogous acrylates were used instead of methacrylates as the monofunctional monomer for the same styrene-isoprene-styrene Kraton(R) D-1107 system. These cured under UV irradiation to

transparent non-phase-segregated products which exhibited markedly inferior physical properties as compared to those of the phase-segregatively cured methacrylate monomer-containing products under the same circumstances, using the same photoinitiator.

Photoinitiators for the methacrylate monomer include the benzoin alkyl ethers, such as benzoin methyl ether, benzoin ethyl ether, benzoin isopropyl ether and benzoin isobutyl ether. Another class of photoinitiators are the dialkoxyacetophenones exemplified by 2,2-dimethoxy-2-phenylacetophenone, i.e., "Irgacure(R) 651" (Ciba-Geigy) and 2,2-diethoxy-2-phenylacetophenone. Still another class of photoinitiators are the aldehyde and ketone carbonyl compounds having at least one aromatic nucleus attached directly to the

$$-\overset{O}{\overset{\parallel}{C}}-$$

group. These photoinitiators include, but are not limited to, benzophenone, acetophenone, o-methoxybenzophenone, acenapthene-quinone, methyl ethyl ketone, valerophenone, hexanophenone, alpha-phenyl-butyrophenone, p-morpholinopropiophenone, dibenzosuberone, 4-morpholinobenzophenone, 4'-morpholinodeoxybenzoin, p-diacetylbenzene, 4-aminobenzophenone, 4'-methoxyacetophenone, benzaldehyde, alpha-tetralone, 9-acetylphenanthrene, 2-acetylphenanthrene, 10-thioxanthenone, 3-acetyl-phenanthrene, 3-acetylindone, 9-fluorenone, 1-indanone, 1,3,5-triacetylbenzene, thioxanthen-9-one, xanthene-9-one, 7-H-benz[de]anthracen-7-one, 1-naphthaldehyde, 4,4'-bis(dimethylamino)-benzophenone, fluorene-9-one, 1'-acetonaphthone, 2'-acetonaphthone, 2,3-butanedione, acetonaphthone, benz[a]anthracene 7.12 dione, etc.

Phosphines such as triphenylphosphine and tri-o-tolylphosphine are also operable herein as photoinitiators. The photoinitiators or mixtures thereof are usually added in an amount ranging from 0.01 to 5% by weight of the total composition.

A class of actinic light useful herein for curing is ultraviolet light and other forms of actinic radiation which are normally found in radiation emitted from the sun or from artificial sources such as Type RS sunlamps, carbon arc lamps, xenon arc lamps, mercury vapor lamps, tungsten halide lamps and the like. Ultraviolet radiation may be used most efficiently if the photocurable composition contains a suitable photoinitiator. Curing periods may be adjusted to be very short and hence commercially economical by proper choice of ultraviolet source, photoinitiator and concentration thereof. Curing periods of about 10 seconds duration are possible, especially in thin film applications such as desired, for example, in coatings. For thicker cured products, curing periods up to 10 minutes, preferably 1-5 minutes, are operable.

When UV radiation is used, an intensity of 0.0004 to 60.0 watts/$cm^2$ in the 200-400 nanometer region is usually employed. High energy ionizing radiation can also be used for the curing step without the use of photoinitiators in the instant invention. If high energy ionizing irradiation is used, e.g., electron beam, a dose in the range of 0.01 - 10 megarads is employed at a dose rate of $1.0 \times 10^{-4}$ - 4,000 megarads/second. Any radiation having an energy of greater than 3.0 electron volts is operable to cause the curing reaction of the instant invention.

The thermal initiators used herein for curing the methacrylate monomer are free radical initiators selected from substituted or unsubstituted pinacols, azo compounds,

thiurams, organic peroxides and mixtures thereof. These initiators are added in amounts ranging from 0.01 to 10% by weight of the total composition.

The organic peroxides operable are of the general formula:

$$R-O-O-(R_1-O-O)_n-R$$

wherein n = O or 1, R is independently selected from hydrogen, aryl, alkyl, aryl carbonyl, alkaryl carbonyl, aralkyl carbonyl and alkyl carbonyl and $R_1$ is alkyl or aryl, said alkyl groups containing 1 to 20 carbon atoms.

Examples of operable organic peroxides include, but are not limited to 2,5-dimethyl-2,5-di(t-butylperoxy)-hexane, 1,3-bis(t-butylperoxyisopropyl)benzene, 1,3-bis-(cumylperoxyisopropyl)benzene, 2,4-dichlorobenzoyl peroxide, caprylyl peroxide, lauroyl peroxide, t-butyl peroxyisobutyrate, benzoyl peroxide, p-chlorobenzoyl peroxide, hydroxyheptyl peroxide, di-t-butyl diperphthalate, t-butyl peracetate, t-butyl perbenzoate, dicumyl peroxide, 1,1-di(t-butylperoxy)-3,3,5-trimethylcyclohexane and di-t-butyl peroxide.

Examples of azo compounds operable herein include, but are not limited to, commercially available compounds such as 2-t-butylazo-2-cyanopropane; 2,2'-azobis-(2,4-dimethyl-4-methoxy-valeronitrile); 2,2'-azobis-(isobutyronitrile); 2,2'-azobis(2,4-dimethylvaleronitrile) and 1,1'-azobis(cyclohexanecarbonitrile).

The thiurams operable as thermal initiators herein are of the formula:

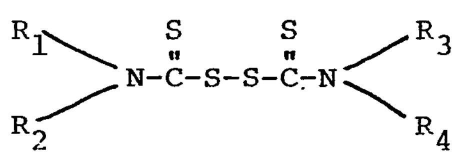

wherein $R_1$, $R_2$, $R_3$ and $R_4$ taken singly can be hydrogen, linear or branched alkyl having from 1 to about 12 carbon atoms, linear or branched alkenyl having from 2 to about 12 carbon atoms, cycloalkyl having from 3 to about 10 ring carbon atoms, cycloalkenyl having from 3 to about 10 ring carbon atoms, aryl having from 6 to about 12 ring carbon atoms, alkaryl having from 6 to about 12 ring carbon atoms, aralkyl having from 6 to about 12 ring carbon atoms and, when taken together, $R_1$ and $R_2$ and $R_3$ and $R_4$ can each be a divalent alkylene group $(-C_nH_{2n}-)$ having from 2 to about 12 carbon atoms, a divalent alkenylene group $(-C_nH_{2n-2}-)$ group having from 3 to about 10 carbon atoms, a divalent alkadienylene group $(-C_nH_{2n-4}-)$ having from 5 to about 10 carbon atoms, a divalent alkatrienylene group $(-C_nH_{2n-6}-)$ having from 5 to about 10 carbon atoms, a divalent alkyleneoxyalkylene group $(-C_xH_{2x}OC_xH_{2x}-)$ having a total of from 4 to about 12 carbon atoms or a divalent alkyleneaminoalkylene group:

$$(-C_xH_{2x}\underset{R}{N}C_xH_{2x}-)$$

having a total of from 4 to about 12 carbon atoms.

Operable thiurams include, but are not limited to, tetramethylthiuram disulfide, tetraethylthiuram disulfide, di-N-pentamethylenethiuram disulfide, tetrabutylthiuram disulfide, diphenyldimethylthiuram disulfide, diphenyl-diethylthiuram disulfide, diethyleneoxythiuram disulfide and the like.

The substituted or unsubstituted pinacols operable herein as a thermal initiator have the general formula:

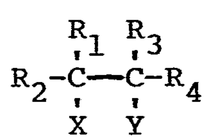

wherein $R_1$ and $R_3$ are the same or different substituted or unsubstituted aromatic radicals, $R_2$ and $R_4$ are substituted or unsubstituted aliphatic or aromatic radicals and X and Y which may be the same or different are hydroxyl, alkoxy or aryloxy.

Preferred pinacols are those wherein $R_1$, $R_2$, $R_3$ and $R_4$ are aromatic radicals, especially phenyl radical, and X and Y are hydroxyl.

Examples of this class of compounds include, but are not limited to, benzopinacol, 4,4'-dichlorobenzopinacol, 4,4'-dibromobenzopinacol, 4,4'-diiodobenzopinacol, 4,4',4",4"'-tetrachlorobenzopinacol, 2,4-2',4'-tetrachlorobenzopinacol, 4,4'-dimethylbenzopinacol, 3,3'-dimethylbenzopinacol, 2,2'-dimethylbenzopinacol, 3,4-3',4'-tetramethylbenzopinacol, 4,4'-dimethoxybenzopinacol, 4,4',4",4"'-tetramethoxybenzopinacol, 4,4'-diphenylbenzopinacol, 4,4'-dichloro-4",4"'-dimethylbenzopinacol, 4,4'-dimethyl-4",4"'-diphenylbenzopinacol, xanthonpinacol, fluorenonepinacol, acetophenonepinacol, 4,4'-dimethylacetophenone-pinacol, 4,4'-dichloroacetophenonepinacol, 1,1,2-triphenyl-propane-1,2-diol, 1,2,3,4-tetraphenylbutane-2,3-diol, 1,2-diphenylcyclobutane-1,2-diol, propiophenone-pinacol, 4,4'-dimethylpropiophenone-pinacol, 2,2'-ethyl-3,3'-dimethoxypropiophenone-pinacol, 1,1,1,4,4,4-hexafluoro-2,3-diphenyl-butane-2,3-diol.

As further thermal initiators according to the present invention, there may be mentioned: benzopinacol monomethylether, benzopinacol monophenylether, benzopinacol monoisopropyl ether, benzopinacol monoisobutyl ether, benzopinacol mono (diethoxymethyl) ether and the like.

The thermal initiators or mixtures thereof are usually added in amounts ranging from 0.1 to 10% by weight of the total composition.

The thermal cure is usually carried out at temperatures in the range 80°-150°C. At these temperatures, phase segregation (transparent solution turns cloudy) is noted within a short period, e.g., 2-5 minutes. Full cures may require curing periods up to 30 minutes or more.

Fillers or reinforcing agents can be present in the product of the present invention. Various fibers (synthetic, modified or natural), e. g., cellulosic fibers, for instance, cotton, cellulose acetate, viscose rayon paper; glass wool; nylon and polyethylene terephthalate can also be used. These reinforced products find particular utility in the laminates area where the cured product may be applied as such to a suitable support by means of an adhesive or the elastomeric blend may be coated directly onto said support and cured.

In practicing the invention, the amount of block copolymer in the composition can range from 1 to 50% by weight with the balance up to 100% by weight being the methacrylate monomer and/or a combination of the methacrylate monomer and diluent.

The following examples will explain, but expressly not limit, the instant invention. Unless otherwise noted, all parts and percentages are by weight.

Example 1

A mixture of 20 g of a styrene-isoprene-styrene triblock copolymer (produced by Shell Oil Company and marketed under the trademark "Kraton$^{(R)}$ D-1107"), 43.9 g of lauryl methacrylate, 2.1 g of trimethylolpropane trimethacrylate and 1.0 g of 2,2-dimethoxy-2-phenylacetophenone, a photoinitiator produced by

Ciba-Geigy Company and marketed under the trademark "Irgacure(R) 651" was stirred at 80°C until a homogeneous blend (21,500 cp) was achieved which occurred after 2 hours. Twenty mil thick films of this blend were drawn down between sheets of Mylar and irradiated at 2.5 $mW/cm^2$ under a pulsed xenon lamp for 4 minutes. The cured film revealed itself to be phase-segregatively cured as visually characterized by its opaque appearance and microscopically characterized by the scanning electron micrographs depicted in FIGURES 1-4 discussed previously.

The following example is set out to show the necessity of using a methacrylate compound in the composition as opposed to an acrylate compound to obtain phase segregation and the resultant improved toughness properties.

Example 2

For comparative purposes another elastomer was prepared according to the same procedure and conditions as specified under Example 1 but which resulted in a product which did not exhibit a phase-segregated cure mechanism, i. e., a product which cured to a visually transparent film and which did not reveal any of the discontinuities in the scanning electron micrograph as characteristic of those revealed in the micrographs of the product of Example 1. This was accomplished by substituting the analogous acrylates for lauryl methacrylate and the trimethylolpropane trimethacrylate. The same proportions as for Example 1 were used and the cure conditions were identical under the 2.5 $mW/cm^2$ pulsed xenon lamp. As can be seen in FIGURES 5-8 of the same magnification as FIGURES 1-4, respectively, no phase segregation occurred.

Example 3

Physical tests under identical conditions were conducted on samples of Examples 1 and 2, and the results

as shown in TABLE I clearly indicate the findings of the present invention, namely that elastomeric systems which are phase-segregatively cured exhibit superior physical characteristics over analogous systems which are non-phase segregated when cured:

TABLE I

| Physical Property | Product of Example 1 | Product of Example 2 |
|---|---|---|
| Modulus | 346 psi | 286 psi |
| Tensile | 525 psi | 95 psi |
| Elongation | 392% | 45% |
| Resilience | 20% | 56% |
| Hardness, Shore A | 53 | 52 |
| Tear Strength (initiation) | 76 lb/in | 5 lb/in |

## Example 4

Elastomers similar to that described in Example 1 were prepared in an identical manner and in the same proportions by replacing lauryl methacrylate with butyl, hexyl or isodecyl methacrylate, the properties of which are listed in TABLE II:

TABLE II

| | Methacrylate Used | | |
|---|---|---|---|
| Physical Property | Butyl | Hexyl | Isodecyl |
| Modulus (psi) | 2770 | 295 | 344 |
| Tensile (psi) | 636 | 577 | 210 |
| Elongation (%) | 395 | 319 | 461 |
| Resilience (%) | 41 | 17 | 13 |
| Hardness, Shore A | 77 | 52 | 53 |

Example 5

A mixture of 20 g of a styrene-butadiene-styrene triblock copolymer (produced by Shell Oil Co. and marketed under the trademark "Kraton(R) DX-1118"), 41.1 g of lauryl methacrylate, 3.3 g of trimethylolpropane trimethacrylate and 1.0 g of 2,2-dimethoxy-2-phenylacetophenone was stirred at 80°C until a homogeneous blend was achieved. A film of this blend was prepared and irradiated as described in Example 1. The cured material was opaque white with a tensile of 399 psi, a modulus of 1180 psi, an elongation at failure of 60%, a Shore A of 72 and a resilience of 22%.

Example 6

A mixture containing 20 g of Kraton D-1107, 43.9 g of lauryl methacrylate, 2.1 g of trimethylolpropane trimethacrylate and 0.7 g of benzopinacol was prepared as described in Example 1. A 20 mil thick film was drawn down between two sheets of Mylar and heated at 110°C for 20 minutes. Phase segregation, as evidenced by an opaque appearance, was apparent at this time although heating was continued for an additional 1.5 hours to effect a full cure.

Example 7

10 g of Kraton D-1107 was blended with 25 g of 2-n-butoxyethyl methacrylate and 2 g of trimethylolpropane trimethacrylate at 80°C until a homogeneous blend was obtained in about 2 hours. 2% Irgacure-651 was added to the blend, and films were prepared and irradiated as described in Example 1. The cured film was cloudy white with a modulus of 1470 psi, tensile of 165 psi, elongation of 700%, resilience of 21% and Shore A of 75.

Example 8

10 g of Kraton D-1107 was blended with 25 g of diethylaminoethyl methacrylate and 2 g of

trimethylolpropane trimethacrylate at 80°C until a homogeneous blend was obtained in about 2 hours. 2% Irgacure-651 was added to the blend and films were prepared and irradiated as described in Example 1. The cured film was cloudy white with a modulus of 2310 psi, tensile of 267 psi, elongation of 708%, resilience of 27% and Shore-A of 84.

WE CLAIM:

1. A curable, liquid, homogeneous, essentially transparent composition comprising

(1) 1 to 50% by weight of a block copolymer containing both hard and soft segments;

(2) 50 to 99% by weight of at least one monofunctional methacrylate monomer of the formula:

$$CH_2{=}\overset{\overset{CH_3}{|}}{C}-\underset{\underset{O}{\|}}{C}-O-R$$

wherein R is an aliphatic moiety containing at least 4 carbon atoms and optionally containing one or more non-adjacent heteroatoms from the group consisting of O and N; and

(3) either a photoinitiator or thermal initiator for (2).

2. The composition according to Claim 1 containing in addition up to 20% by weight based on the weight of the composition of a reactive diluent of the formula:

$$(CH_2{=}\overset{\overset{R_1}{|}}{C}-\underset{\underset{O}{\|}}{C}-O)_n-R_2$$

wherein $R_1$ is H or $CH_3$ and $R_2$ is an organic moiety having the valence of n and n is 1 or more.

3. A process for forming a reinforced elastomer having improved toughness properties which comprises admixing a curable, liquid, homogeneous, essentially transparent composition comprising

(1) 1 to 50% by weight of a block copolymer containing both hard and soft segments;

(2) 50 to 99% by weight of at least one monofunctional methacrylate monomer of the formula:

$$CH_2=\overset{CH_3}{\overset{|}{C}}-\underset{O}{\underset{\|}{C}}-O-R$$

wherein R is an aliphatic moiety containing at least 4 carbon atoms and optionally containing one or more non-adjacent heteroatoms from the group consisting of O and N; and

(3) either a photoinitiator or thermal initiator for (2)

and exposing said composition to either UV radiation or a temperature in the range 80-150°C for a period sufficient to obtain a cured, phase segregated product.

4. The process according to Claim 3 wherein the composition contains in addition up to 20% by weight based on the weight of the composition of a reactive acrylic diluent of the formula:

$$(CH_2=\overset{R_1}{\overset{|}{C}}-\underset{O}{\underset{\|}{C}}-O)_n-R_2$$

wherein $R_1$ is H or $CH_3$ and $R_2$ is an organic moiety having the valence of n and n is 1 or more.

5. The cured composition of Claim 1 as a film.

6. The cured composition of Claim 1 as a coating.

7. The cured composition of Claim 1 as a laminate.

8. The cured composition of Claim 2 as a film.

9. The cured composition of Claim 2 as a coating.

10. The cured composition of Claim 2 as a laminate.

0238863
1/4

FIGURE 1

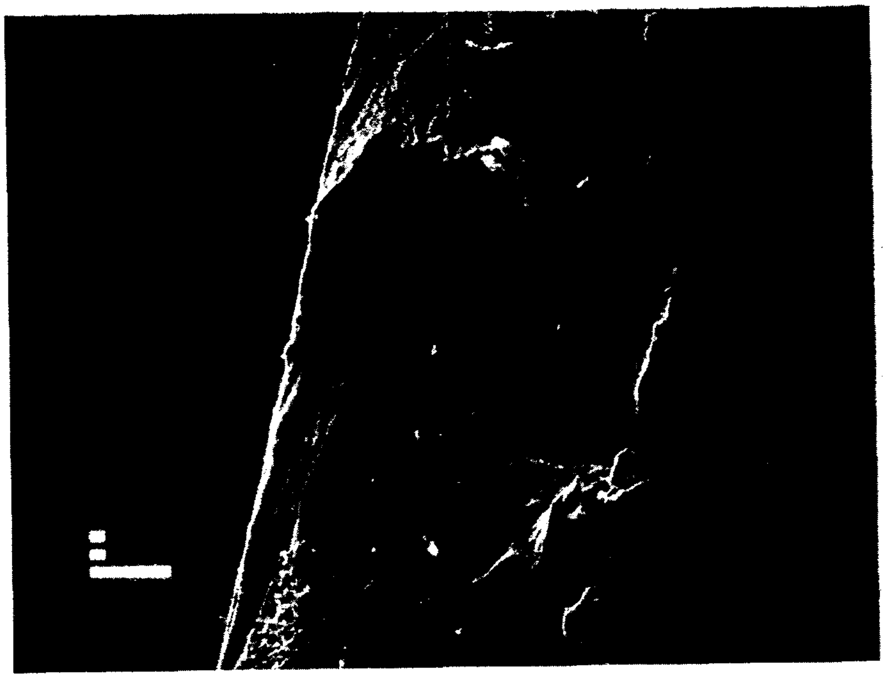

Phase Segregated 100X

FIGURE 2

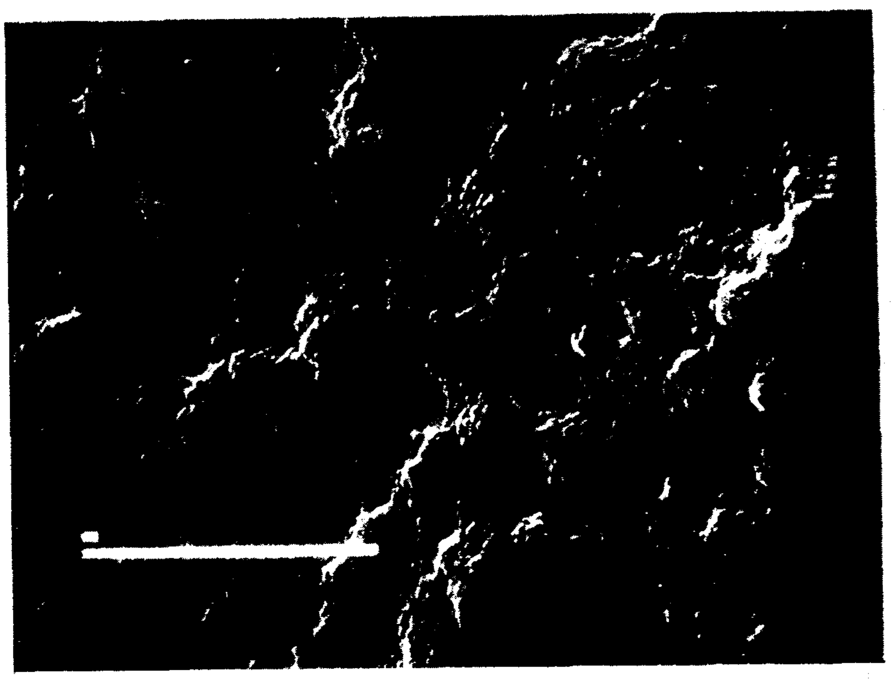

Phase Segregated 4,000X

FIGURE 3

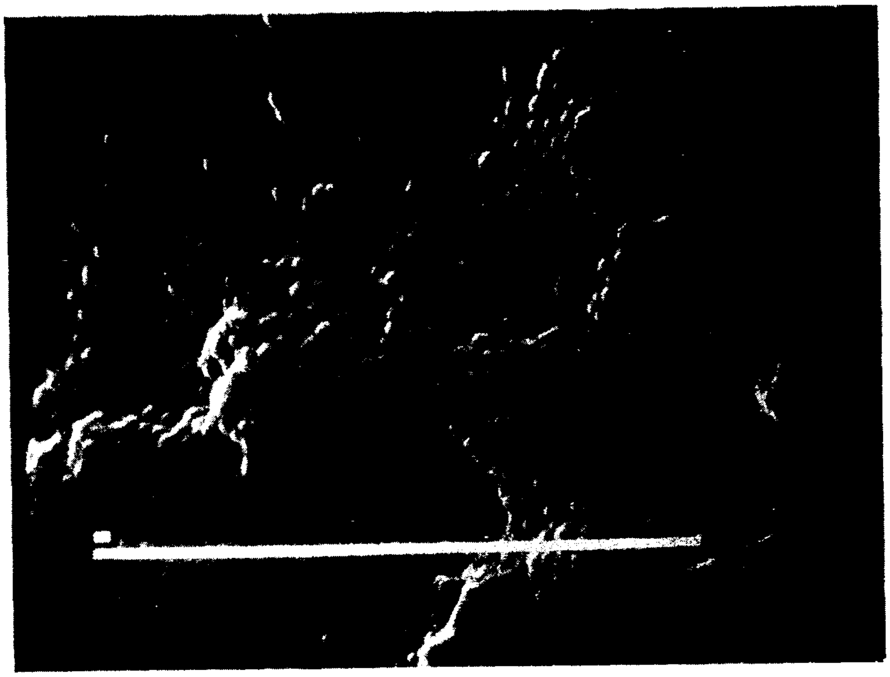

Phase Segregated 8,000X

FIGURE 4

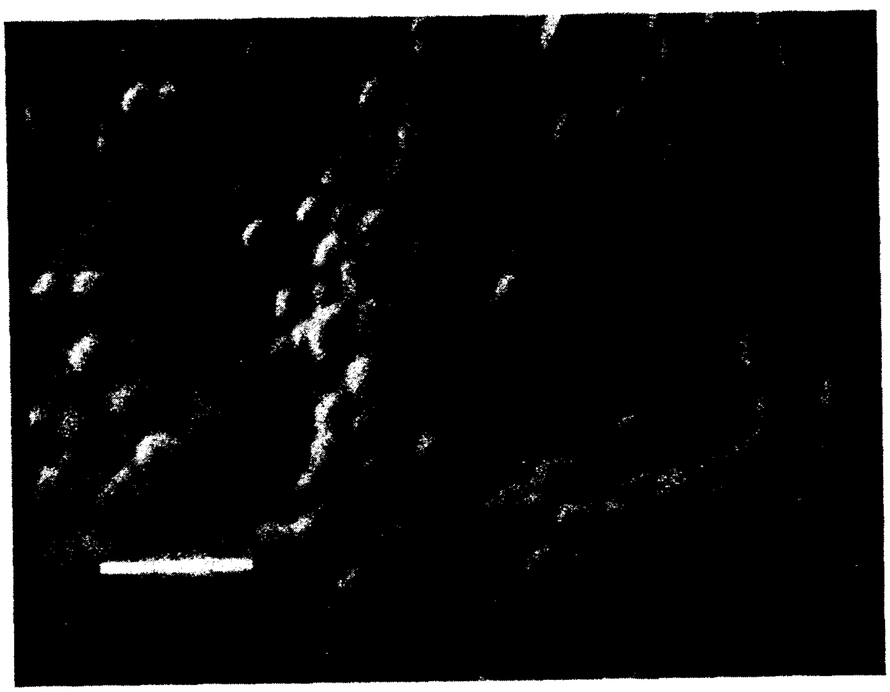

Phase Segregated 20,000X

FIGURE 5

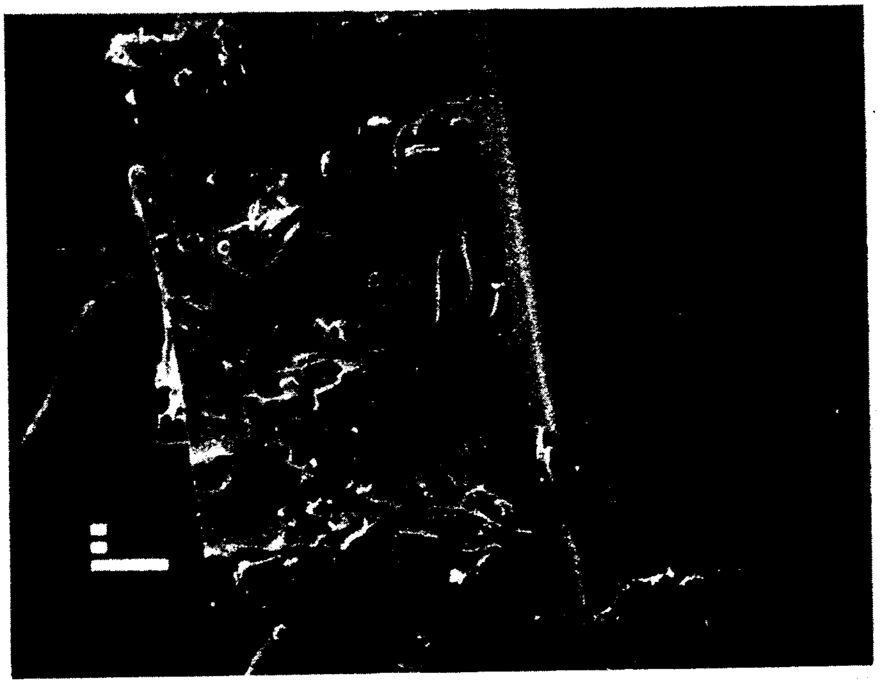

Non Phase Segregated 100X

FIGURE 6

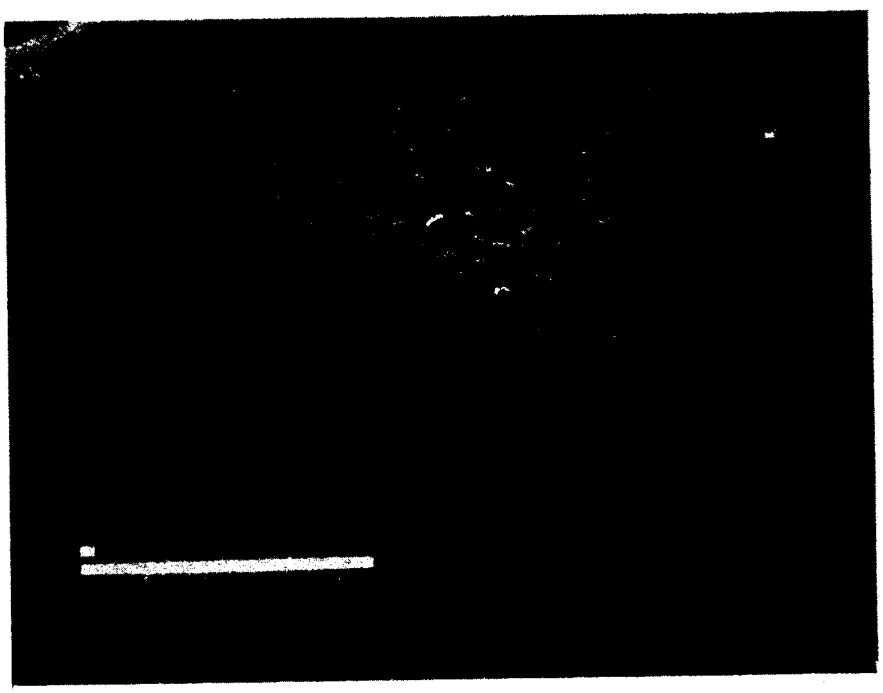

Non Phase Segregated 4,000X

FIGURE 7

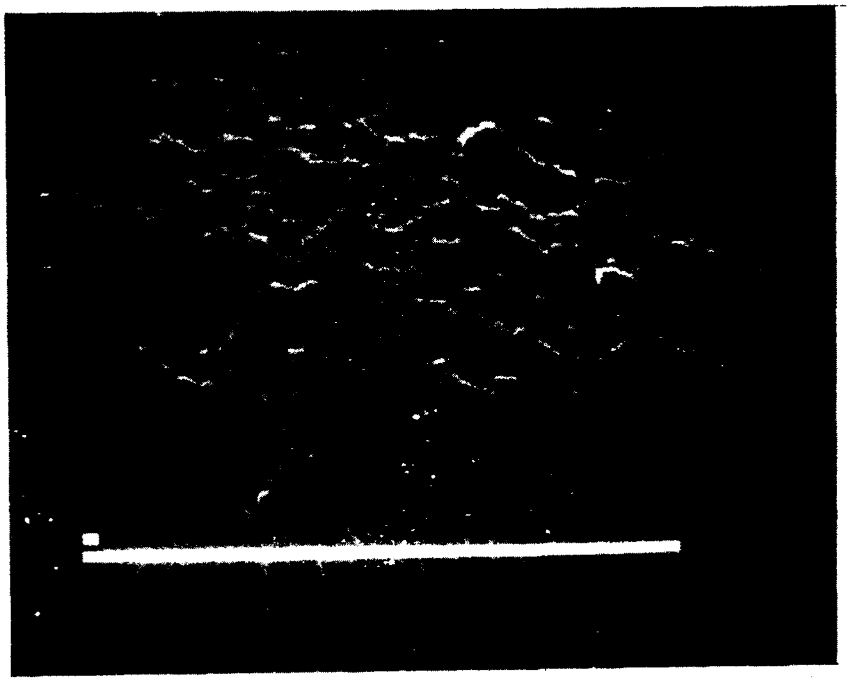

Non Phase Segregated 8,000X

FIGURE 8

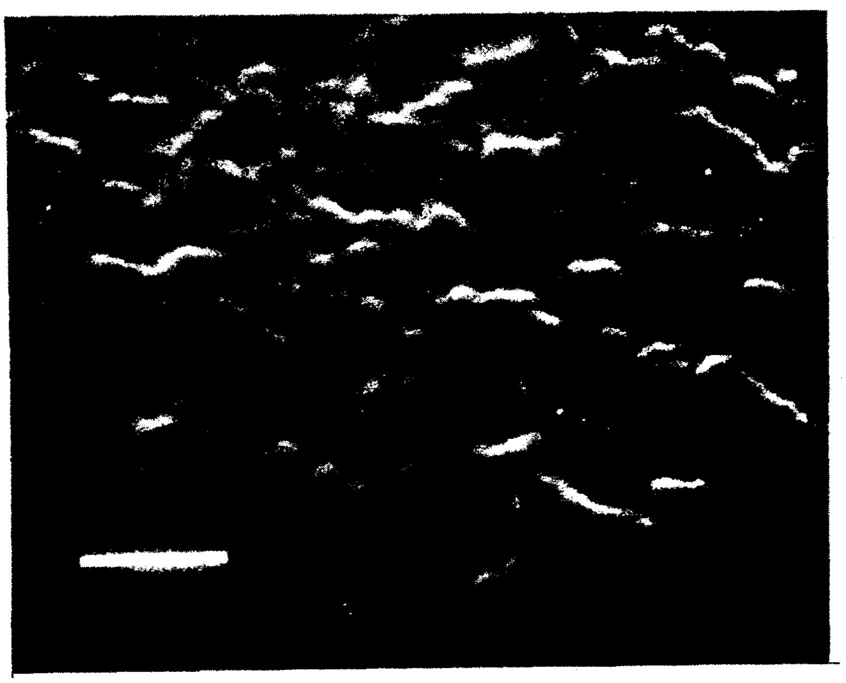

Non Phase Segregated 20,000X